# EUROPEAN PATENT APPLICATION

(11) **EP 4 614 446 A1**
(43) Date of publication of application: **10.09.2025**
(21) Application number: 24162083.0
(22) Date of filing: 07.03.2024
(51) Int. Cl.: G06T 15/08, G06T 15/20, G06T 17/00

(54) **3D MODEL TRAINING**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer implemented method, comprising: acquiring a plurality of images of a first scene captured from different viewing positions; training a 3D implicit neural representation model for the scene using the acquired images; wherein the training comprises rendering an image from the 3D model of the scene, the image being rendered as if captured from a first viewing position, comparing the rendered image with one of the acquired images taken from the first viewing position, and adjusting one or more parameters of the model in dependence on a result of the comparison; and the training further comprises rendering a 2D spatial image bearing 3D information, the 2D spatial image being rendered as if captured from a second viewing position, and adjusting one or more parameters of the model in dependence on the 2D spatial image.

## Description

The present disclosure relates to an apparatus and a method for 3D model training, including but not limited to accelerating training of a 3D model represented by an implicit neural representation such as a Neural Radiant Field (NeRF) or Neural Surface Reconstruction (NueS) model.

### BACKGROUND

The formation of accurate 3D models of scenes based on captured 2D images of those scenes is important for many applications. One example is in the formation of digital twins. Digital twins are real-time, high-fidelity, data-driven models that mirror and synchronise with real-world physical or logical assets, processes, or systems. They use real-time data to model and optimise system outcomes before they occur, enabling better-informed decision-making and ultimately saving time and resources. A key element in the creation of digital twins is visualisation. Automatic capture of physical complex objects is a challenge.

Where a 3D model is generated automatically based on inputted 2D images of the scene to be modelled, an amount of time and data processing required to achieve this may be substantial before the 3D model settles into a state which accurately reflects the scene.

Embodiments of the present invention seek to speed up the training process so that the 3D model may reach an accurate steady state earlier, and with less data processing.

The examples described herein are not limited to examples which solve problems mentioned in this background section.

### SUMMARY

Various aspects and features of the invention are as set out in the accompanying independent and dependent claims.

According to a first aspect there is provided a computer implemented method, comprising: acquiring a plurality of images of a first scene captured from different viewing positions; training a 3D implicit neural representation model for the scene using the acquired images; wherein the training comprises rendering an image from the 3D model of the scene, the image being rendered as if captured from a first viewing position, comparing the rendered image with one of the acquired images taken from the first viewing position, and adjusting one or more parameters of the model in dependence on a result of the comparison; and the training further comprises rendering a 2D spatial image bearing 3D information, the 2D spatial image being rendered as if captured from a second viewing position, and adjusting one or more parameters of the model in dependence on the 2D spatial image.

The 2D spatial image may for example be a depth image, or a surface normal image. Where a surface normal image is used, each pixel of the surface normal image has a value indicative of a direction of a normal to a surface present in the 3D model at the position corresponding to that pixel (within the rendered field of view). Where a depth image is used, each pixel of the depth image has a value indicative of a distance from the first viewing position to the surface present in the 3D model at the position corresponding to that pixel (within the rendered field of view).

The captured images and the rendered images are intensity or brightness images. These may be greyscale images in which only a light intensity of each pixel is defined, or a colour image in which an intensity is defined for each given colour, for example using an RGB (Red, Green, Blue) representation (RGB images).

The second viewing position may be the same or different than the first viewing position. Preferably the first and second viewing positions are the same in at least some instances, because rendering the intensity/colour images and the surface normal / depth images from the same viewpoint is computationally less expensive than rendering from different viewpoints. However, this is not required, and in some cases the ability to train the model using rendered viewpoints which do not correspond to any of the input images permits training with sparser input image sets.

The method may comprise denoising the 2D spatial image, or a filtered version of the 2D spatial image to form a denoised image, comparing the 2D spatial image or filtered version of the 2D spatial image with the denoised image, and adjusting the one or more parameters of the model in dependence on the comparison. The comparison in this case indicates a difference, or differences, between the noisy and denoised image, which is a reflection of the accuracy of the implicit neural representation in modelling certain aspects (surfaces in particular) of the scene (which are reflected in the 3D information borne by the 2D spatial images). This information may then be used to aid with refining the model.

Some embodiments of the present technique seek to accelerate NeRF Training via the use of learnt priors on Laplacians of implicit fields. Some embodiments can enhance the speed and experience of both building and using these products by providing a quicker solution of scanning and reconstructing scenes with human-manufactured objects, which can be turned into either an important module in the pipeline or an individual product for the customers to use. Experiments show a 15%-25% improvement of converging time compared to traditional NeRF methods. Further experiments shows that the converging advantage may vary, such that the lower bound may exceed 10%, but there can be a stable improvement on 3D reconstruction performance (over chamfer distance) by 5%-20%, and the accuracy loss against decreasing data-amount may also be stabilised.

The method may comprise applying a surface shape filter to the 2D spatial image, the surface shape filter preferably being a Laplacian filter. A Laplacian filter is highly effective method of characterising surface characteristics, such as sharp edges, flat areas and curves, when applied to a surface normal image in particular, but also with other 2D spatial images bearing 3D information such as depth images. As will be discussed, the resulting Laplacian image is invariant to coordinate system or camera pose, making it particularly suitable for being denoised and compared with the noisy (prior to denoising) version of itself to identify the accuracy of modelling in relation to surface characteristics such as those indicated above.

The denoising of the filtered (normal or depth) image may be carried out using a denoising network. The denoising network has preferably been trained using synthetic 3D objects, more preferably objects being similar to those expected to be present in the scene modelled by the neural radiance field model.

The method may comprise synthesising a second scene containing one or more synthetic 3D objects, rendering a 2D spatial image bearing 3D information of the second scene as if captured from a third viewing position, applying noise to the rendered 2D spatial image, and training the denoising network based on (a comparison of) the filtered noisy 2D spatial image and the filtered original 2D spatial image.

The third viewing position is not generally related to the first viewing position or the second viewing position, since it is desirable to train the denoising network to be invariant to viewing position.

When training the denoising network, a surface shape filter may be applied to the noisy 2D spatial image and the original 2D spatial image, to pick out surface characteristics in the same manner as for the data rendered from the implicit neural representation as described above. In this case, the denoising network is trained based on the (comparison of) the filtered versions of the 2D spatial images (that is, the Laplacian images for example).

The noise applied to the 2D spatial images generated for training the denoising network is preferably an approximation of an expected type of noise to be generated when rendering a 2D image of a partially trained neural radiance field model.

The denoising network may be trained simultaneously on a plurality of Laplacian (for example) images, rendered from different (but preferably similar) views of the scene. In this case the model is trained to minimise the error across all of the plural images simultaneously.

When applying the denoising network to the 2D spatial images rendered from the implicit neural representation, the method may comprise comparing the denoised filtered 2D spatial image with the noisy 2D spatial image generated by the implicit neural representation model, and generating a first error signal in dependence on the differences, wherein the first error signal is used to define a supervisory signal for adjusting the parameters of the implicit neural representation model. The first error signal generated in dependence on the 2D spatial image may be combined with a second error signal generated from comparing the rendered RGB images with the acquired images to form the supervisory signal. The first and second error signals may be weighted, and a weighting of the first error signal may reduce (compared with the second error signal) as training of the model progresses.

The method may comprise rendering and displaying a 2D image from the 3D model, preferably once the model has been fully trained. The 2D image may be generated in response to a user input to a user interface. The user input may specify a viewpoint with respect to which a 2D image of the scene represented by the 3D model is rendered.

According to a second aspect, there is provided an apparatus comprising: a memory storing a plurality of images of a first scene captured from different viewing positions, and storing an implicit neural representation model for the scene; and a processor for training the model using the acquired images. The training comprises rendering an image from the 3D model of the scene, the image being rendered as if captured from a first viewing position, comparing the rendered image with one of the acquired plurality of images taken from the first viewing position, and adjusting one or more parameters of the model in dependence on a result of the comparison. The training further comprises rendering a 2D spatial image bearing 3D information, the 2D spatial image being rendered as if captured from a second viewing position, and adjusting one or more parameters of the model in dependence on the 2D spatial image.

Also provided is a computer program, which when executed on a data processing apparatus causes the data processing apparatus to carry out a method according to the above.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of a 3D implicit neural representation model and trainer;

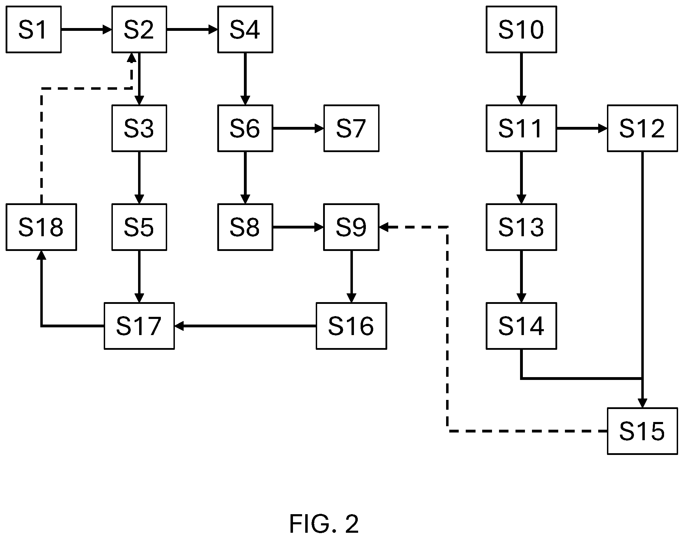

FIG. 2 is a schematic flow diagram of the method of operating the 3D implicit neural representation model and trainer of FIG. 1; and
FIG. 3 is a schematic diagram of a data processing apparatus for rendering images using the fully trained implicit neural representation model.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

The 3D reconstruction area is mainly divided into explicit reconstruction and implicit reconstruction.

Explicit reconstruction tries to reproduce the topological information of the surface with an accurate shape, it is one of the most widely used family of reconstruction methods in classic 3D pipelines.

In contrast, implicit surface reconstruction involves representing the scene as a continuous function that maps 3D points in space to their corresponding colours and densities. This approach may be computationally expensive comparing to explicit representation since it is trying to reproduce a full 3D volume rather than a set of surfaces. But it's ability of representing arbitrary topology in a differentiable way makes it capable of integrating with deep learning techniques, to infer hidden areas, reduce noise and cooperate with other deep-learning based algorithms.

Trained deep-learning networks like DeepSDF [Park, J. J., Florence, P., Straub, J., Newcombe, R., & Lovegrove, S. (2019). "Deepsdf: Learning continuous signed distance functions for shape representation". In Proceedings of the IEEE/CVF conference on computer vision and pattern recognition (pp. 165-174).] or Convolutional Occupancy Networks [Peng, S., Niemeyer, M., Mescheder, L., Pollefeys, M., & Geiger, A. (2020). "Convolutional occupancy networks." In Computer Vision-ECCV 2020: 16th European Conference, Glasgow, UK, August 23-28, 2020, Proceedings, Part III 16 (pp. 523-540). Springer International Publishing.] try to decode the implicit surface from latent embeddings, which encapsulates shape priors into the network parameters, makes it possible for the network to infer large area of irregular data. But in real-cases, due to the limitations of network and dataset scale, the outcome is usually trapped inside certain patterns of prior, leading the network to be more likely to recognize-and-retrieve known shapes instead of reconstructing new shapes from input data.

A Neural Radiance Fields (NeRF) is a cutting-edge technique in the field of computer vision and graphics that has gained significant attention due to its ability to reconstruct 3D scenes from 2D images and synthesize novel views. Based on implicit 3D reconstruction, it can provide confident reconstruction result from multi-view image within hours or even minutes. An example of a NeRF technique is described in Ronneberger, O., Fischer, P., & Brox, T. (2015). "U-Net: Convolutional networks for biomedical image segmentation". In Medical Image Computing and Computer-Assisted Intervention-MICCAI 2015: 18th International Conference, Munich, Germany, October 5-9, 2015, Proceedings, Part III 18 (pp. 234-241). Springer International Publishing.

Generally, NeRF attempts to overfit an entire neural network to represent a single scene to overcome the above problem. By applying differentiable raymarching rendering techniques, it samples the colour and density of each point along each viewpoint ray in the 3D space, and renders the result into an image, and is trained against the ground-truth photos with corresponding perspective. Under this paradigm, the neural network converges into a state that the entire 3D information of the scene is stored as the parameters of the Neural Network.

Despite its impressive performance, NeRF has some shortcomings. One of the main limitations of NeRF is that it requires many input images to capture the scene's details accurately. This can make it challenging to train NeRF on real-world scenes with limited access to high-quality images, and the fact it trains the entire Neural Network for each scene makes it hard to integrate priors to accelerate the training process. Thus, the information efficiency of NeRF-based models is usually much lower than other neural-network driven algorithms.

Various way of improving NeRF-based models have been considered. For example, in Wang, Z., Wu, S., Xie, W., Chen, M., & Prisacariu, V. A. (2021). NeRF: "Neural radiance fields without known camera parameters". arXiv preprint arXiv:2102.07064, a NeRF technique used for representing and rendering 3D scenes using deep learning models involves training a neural network to predict the colour and density of each point in a scene, allowing for the generation of high-quality images from novel viewpoints. The prior disclosures of traditional NeRF typically focus on addressing some of its limitations or improving its performance in certain aspects.

In Yu, A., Ye, V., Tancik, M., & Kanazawa, A. (2021). "Pixel-NeRF: Neural radiance fields from one or few images". In Proceedings of the IEEE/CVF Conference on Computer Vision and Pattern Recognition (pp. 4578-4587), a variation of NeRF is proposed that utilizes Convolutional Neural Networks (CNNs) to encode input multi-view images. Unlike traditional NeRF, which requires retraining for each scene, Pixel-NeRF integrates the full prior into the network, allowing it to generalize across scenes without retraining. However, this approach may result in over-constrained outputs as the network infers the outcome solely from the latent embeddings learned from the training data.

In Deng, K., Liu, A., Zhu, J. Y., & Ramanan, D. (2022). "Depth-supervised NeRF: Fewer views and faster training for free". In Proceedings of the I EEE/CVF Conference on Computer Vision and Pattern Recognition (pp. 12882-12891), another way of integrating geometric priors into the network is proposed. In particular, given a set of multi-view images, it leverages a neural network to infer a depth map of each image and applies the depth map as a strong constraint to integrate into the loss function, to accelerate NeRF training with priors. Since the Depth-supervised NeRF generates a set of depth maps from the input data and treats them as a static constraint to rule the training process, the final output is highly coupled with the performance of the depth inference network. Also, the supervisory signal is determined by the amount of input multi-view images. These factors constrain the effectiveness of this method.

It will be appreciated from the above that traditional NeRF methods have several limitations, including slow convergence and difficulty integrating priors into the network. These issues require each scene to be trained from scratch, which is time-consuming and resource-intensive.

A variation of NeRF is NeuS. This technique prefers SDF over occupancy/density fields. Together, these and other similar techniques may be categorised as implicit neural representation models or techniques.

The present technique seeks to overcome some of the above challenges by utilizing the insights that human-manufactured objects typically have clear surfaces and edges, and the Laplacian of the signed-distance-field (SDF)/density field around 3D surfaces carries rich information about its geometry. By applying an extra supervised training to perform a regression over the extracted Laplacian projection from differentiable rendering during the training process, it is possible to effectively incorporate this geometric information into the NeRF/NeuS (implicit neural representation) model. The present technique generally prefers a signed-distance-field over an occupancy/density field.

Furthermore, this approach employs a denoising neural network to accelerate the convergence of the Laplacian features on each training step. This allows for the denoised Laplacian, which contains (or is at least influenced by) the geometric priors from the training data, to act as a supervisory signal, guiding the convergence of the implicit neural representation more efficiently.

The present technique seeks to accelerate implicit neural representation training for 3D reconstruction of scenes with human-manufactured objects. This involves extracting the Laplacian projection from differentiable rendering during the training process of the implicit neural representation and using a denoising neural network to accelerate its convergence. This allows for the incorporation of geometric priors from the training data, resulting in improved convergence and reduced training time.

The convergence is accelerated by the denoising network that filters noise of the Laplacians. The objects in the scene modelled by the implicit neural representation model and the synthetic 3D objects are linked by the shared probability distribution of Laplacian images (representing 3D structures) across scenes. From the perspective of data-flow, the only necessary link is an error signal generated by comparing the Laplacian output of NeRF/NeuS and the denoised version (denoised by the trained denoising network). This couples the information of that shared probability distribution across from the synthetic 3D objects used to train the denoising network, and the implicit neural representation of the scene which can be expected to include similar 3D objects.

The Laplacian is the preferred form of surface shape filter for processing the 2D spatial images generated from the implicit neural representation model, although other filters could equivalently be used to emphasise, isolate or identify specific surface characteristics. The Laplacian takes its maximum/minimum from sharp structures (edges and corners), but additionally the Laplacian for flat surfaces is always zero and for sphere and side-of-cylinders is always constant, and this information is also relevant.

Overall, the present technique offers several advantages over existing techniques. It enables faster convergence during training of the implicit neural representation, reduces the need for retraining models for each scene, and incorporates geometric priors effectively (albeit indirectly). These benefits make it a valuable tool for 3D reconstruction tasks specifically involving human-manufactured objects. Retraining for each scene is still required, but is accelerated (in both time and data-amount needed per scene) and benefits from a higher accuracy.

Compared with existing techniques, the present technique aims to accelerate training of the implicit neural representation by incorporating geometric priors into the network (by training a denoising network using synthetic 3D objects). This distinguishes it from traditional NeRF approaches that do not explicitly consider geometric information during training. By leveraging the clear geometries and edges typically found in human-manufactured objects, the present technique seeks to improve the efficiency and accuracy of implicit neural representation-based 3D reconstruction.

The present technique does not rely solely on latent embeddings learned from training data to infer the output, but instead incorporates additional information about the geometry and structure of human-manufactured objects. This allows for more accurate and realistic reconstructions, especially in scenes with complex geometries or when limited training data is available. Secondly, the method requires retraining for each scene as traditional NeRF does, but by integrating partial priors instead of full prior, it achieves a balance between the training speed and the accuracy of reconstruction, making it more scalable and applicable to a wider range of applications.

The present technique applies a denoising network to the output of the algorithm (the Laplacian image) and provides a heuristic improvement result that is feed into the next training step in every iteration (until an end state for this algorithm is achieved), thus leading the reconstruction result to evolve accordingly to both the raw inputs and the higher-level learnt geometric priors.

With the present technique, to overcome the data-efficiency problem of NeRFs while keeping the advantages of it, partial priors are integrated into the implicit neural representation training, such that in the early stage of training, it leverages these priors to accelerate itself, and gradually become free from those priors to converge to the final scene. This is performed by learning a denoising network on the 3D structures that the implicit neural representation inferred during each training step, and the denoised result is then compared with the noisy original version, and the difference (error) between these is used as a supervisory signal of the next training step.

In this use case, the Laplacian distribution of the density/SDF field around the surface is used, since it carries the below features:
Sparsity: The Laplacian distribution of the field is usually sparse for man-made objects Informativeness: The Laplacian distribution of the field carries the curvature information of the corresponding surface, this overcomes the fact that most reconstruction techniques focus on the information carried on surfaces (2D manifolds on 3D spaces), while the original signal of an implicit density/SDF field focuses more on the 3D space itself.
Pose/Projection invariance: The Laplacian value of an implicit field around the surface is independent of the angle of the local surface area and the projection plane.

The system comprises an implicit neural representation model 10, and a trainer 20 which trains the implicit neural representation model 10 to accurately represent a 3D scene based on a set of 2D images 30 of that scene. The set of 2D images may be RGB images taken by an image capture device such as a camera, from various different locations and angles (viewpoints) about the scene. A differentiable renderer 40 renders 2D images based on the model 10, each image being generated for a perspective/viewpoint corresponding to a perspective/viewpoint of a respective one of the images 30. The trainer 20 is configured to compare the images generated by the renderer 40 with the set of real-world images 30, and to adjust the parameters of the model 10 based on the difference (error), to reduce the difference/error in a next iteration of the model 10. The renderer 40 also generates surface normal images (in this example, although other 2D spatial images bearing 3D information, such as depth images, could be used instead in other implementations), having values corresponding to a direction of a normal at each spatial position in a 2D image taken from a particular perspective/viewpoint (this may be the same viewpoint as a corresponding 2D image, which is more efficient than rendering from different viewpoints than the RGB images). A surface shape filter module 45 is provided, which is configured to process the normal images into surface-shape identifying images in which object edges and shapes within the field of view are shown, emphasised or otherwise clearly denoted. Preferably the surface shape filter module 45 applies a Laplacian filter to highlight the edges, planes and curved surfaces (and de-emphasise non-edges, or features not having clearly defined surface structures) from the 2D spatial image.

The system also comprises a denoising network 50 configured to remove noise from the edge-identifying images generated by the renderer edge detection module 45. The denoising network 50 is trained by a denoising network trainer 60 using 3D assets 70 (models) having contextual similarities with objects within the scene being represented by the model 10. For example, if the scene being imaged is an interior view of a house, the 3D assets may be furniture items and other household structures, such as sofas, tables, chairs, stairs and doorways. Similarly, if the scene being imaged is an industrial estate, the 3D assets may be industrial buildings, vehicles and shipping containers. Since the denoising network 50 is trained using 3D objects likely to be similar to real-world structures in the model 10, the denoising network 50 is effectively optimised for cleaning up the rendered (and filtered) normal images generated from the model 10 by the renderer 40.

During training the internal model, the below process is performed:
At a step S1 a set of real-world multi-view training images 30 are provided. These are 2D images, captured by imaging equipment such as cameras, which are taken from various different perspectives around the scene. At a step S2 this set of 2D images are processed to generate an initial estimate for the 3D model 10, and in particular to establish the implicit neural representation of the scene. At a step S3 the differentiable renderer 40 renders a set of RGB images from the model 10, each image being rendered as if from a viewpoint corresponding to one of the 2D images 30 provided at the step S1. In parallel with the step S3, at a step S4, the renderer 40 generates a set of normal images (each having a perspective / viewpoint preferably corresponding to one of the RGB images, for computational efficiency) based on the model 10.
At a step S5, each RGB image is compared with a real world image having a corresponding viewpoint, and an error is estimated based on the comparison. If the 3D model were to be perfect, and the real-world images perfect (that is, without noise or artefact), then the error would be expected to be zero. In practice though, imperfections in the model (which are sought to be minimised) along with imperfections in the 2D images mean that the comparison at the step S5 is likely to identify errors. These errors may be used as part of a supervisory signal (described subsequently) to iteratively refine the model 10 to reduce the errors.
At a step S6, it is determined if the supervised training using the normal images generated at the step S4 (in contrast to the supervised training using the RGB images) should continue or be terminated (or reduced in weight compared with the RGB-based training) at a step S7. In particular, the present technique operates particularly effectively at early stages of supervised training, but may in some cases be ineffective or even counter-productive as the training progresses to a final steady state. As such, the step S6 makes it possible to discontinue this element of the training (while the training using the RGB images continues). If it is determined at the step S6 that the supervised training using the normal images should be continued, then at a step S8 a Laplacian filter is applied to the normal images by the module 45. This may for example be applied using a 3x3 gradient kernel. This results in a noisy Laplacian image being output (noisy because it contains noise due to the rendering process, and noise in the underlying 3D model - in part due to noise in the original 2D images used to generate the model). At a step S9 the noisy Laplacian image is processed by the denoising network 50 to generate a denoised Laplacian image. The denoising network 50 may apply a denoising auto-encoder to denoise the Laplacian images, the auto-encoder being trained against the synthetic data (as will be explained below). A simple U-Net based auto-encoder can achieve a clear result, but other structures of denoising networks are also applicable.

One option for the denoising network is to use a U- Net based auto-encoder, but with a slightly different input-output. In particular, the input may be an RGB type image in which the G-channel carries the Laplacian image, the R-channel carries an L-neighbour Laplacian image generated from a normal image rendered from a different (but relatively close) camera pose, and the B-channel carries an R-neighbour Laplacian image generated from a normal image rendered from a second different (but relatively close) camera pose. The output is also such a denoised RGB-type image. The R and B channels in this case may be homographically projected onto the B channel to calculate an NCC error to ensure its consistency.

To explain the significance of this, when a multi-view image of a single scene, given a Laplacian Image (with single channel, later passed as channel G) projected onto the camera plane, there exists neighbour images which are taken from other poses (rendered from different viewpoints). Relative to the camera pose of the main normal image, the Laplacian images with the poses on the left-hand and right-hand side of that camera with the minimum angle relative to its focus point are selected as R and B. In this way, the denoising network takes information from the 2D spatial images of other views. The output attempts to denoise the 3 different views simultaneously and assign it to the corresponding R-G-B, however only the G channel of the denoising result is applied as the supervision signal for further implicit neural representation. When training the denoising network, the R-B channels of the denoised output are projected onto G-image using homography transformation. The Homography transformation is a technique that, given an image I_0 of camera pose P_0 and the data of the scene, estimates what the corresponding image I_1 looks like taken from a slightly different pose P_1 (with similar orientation).

The technique takes the noisy input from three (slightly) different poses and forces their denoised result to be consistent after homographically projection onto the same camera plane, thus leveraging potential 3D spatial signals to guide the denoising network to learn a better representation.

The steps S10 to S15 describe in more detail how the denoising network 50 is trained. In particular, at a step S10 a PCG (procedural content generation) scene synthesiser generates a 3D scene containing one or more objects acquired from a 3D assets store 70. It has been estimated that approximated 20,000 images in total rendered from 50-200 different 3D scenes that align with the same object/scene category may be appropriate, with PCG (Procedural Content Generation) being used to generate those scenes and apply a simple render to render those scenes into images.

At a step S11 a renderer generates a normal image / map (camera-space normal-channel images, of which the R-G-B channel of the image states for the normal vector relative to the camera projection plane) from a given perspective. At a step S12 the normal image is processed by a Laplacian filter (similarly to the step S8, using a 3x3 gradient kernel), for form a ground-truth Laplacian image / map. In parallel with the step S12, a noise generator applies noise to the normal image at a step S13, to mimic noise expected to be produced in the generation of a normal image by a partially trained implicit neural representation model. This results in a noisy normal image. One example implementation uses three components: Gaussian Blur (add random gaussian blur), Perlin Noise (add Perlin fractal noise with random frequency and strength), and White Noise (add white noise with random strength). However, these algorithms represent just one-use case of a noise integration module - other algorithms may instead be used to mimic the noise distribution produced by the implicit neural representation.

Then, at a step S14 the noisy normal image is processed by a Laplacian filter (identically to that applied to the (clean) normal image at the step S12, using the 3x3 gradient kernel to form a noisy Laplacian map (Laplacian of the implicit field around the surfaces). The denoising network trainer is then able to, at a step S15, compare the noisy Laplacian map with the ground-truth Laplacian map, and generate (or refine) network parameters of the denoising network to be optimised for removing noise from Laplacian images / maps derived from normal images having noise characteristics of a partially trained NeRF/NeuS model and object / surface types as per the 3D assets. This may be achieved either using a single-channel process (optimising for the Laplacian images individually), or on the multi-channel (RGB channels) to optimise of three images having slightly different (but preferably similar) views of the scene. Since the 3D assets are selected to be of a type similar to those expected to be present in the scene being modelled by the model 10, this means that the denoising network is especially suited to denoising the Laplacian images / maps generated by the step S8. As such, the step S9 can be highly effective in generating the denoised Laplacian. The parameters of the denoising network are frozen while the network seeks to infer a denoised version of the Laplacian image at the step S9.

At a step S16, the denoised Laplacian image is compared with the noisy Laplacian image, to determine an error signal (representative of a measure of noise in the noisy Laplacian image). At a step S17, this error signal is combined with the error signal determined at the step S4, in a weighted average. The weighting between the two error signals may for example vary over time, with the contribution made by the error signal determined at the step S16 being given a relatively large weighting near the start of the training process, and gradually diminishing (potentially to zero) as the training process progresses. At a step S18, the combined (weighted) error signal is used as a supervisory signal in the training process, resulting in refinement of the implicit neural representation parameters describing the 3D model. It will therefore be appreciated that the denoised Laplacian is compared with the noisy Laplacian, and the difference (error) used as, or to form, the supervisory signal during the error propagation. The factor of this part of the supervisory signal decreases through time gradually such that the final output will not be significantly affected by those priors.

It will understood that, to train a denoising network for the Laplacian of the implicit field from scratch, the training data should be constructed to mimic the ground-truth distribution of the image data to be denoised. Synthetic data is used instead of real-world acquired data because the current existing real-world scanned dataset contains noise from both the sensors and the reconstructing algorithms, such that if using the real-world scanned dataset the supervisory signal will be polluted by those sources of noise.

To avoid this, the constructed training data has substantially the same distribution as the reconstruction task. In practice, this means using 3D models that are in the same category as the objects sought to be reconstructed, and for interior scene reconstruction, the training data should be composed of various indoor scenes.

The error signal between the denoised Laplacian, and the noisy Laplacian generated from the implicit neural representation can be considered a measure of how accurately (or inaccurately) the implicit neural representation is representing the kinds of 3D objects on which the denoising network was trained.

A large error suggests that the implicit neural representation is not currently representing these objects well, leading the trainer to adjust the parameters of the model relatively significantly to compensate. Similarly, a small error suggests that the implicit neural representation is currently representing those kinds of 3D objects well. It should be noted that this only applies for well-trained denoising networks, and as a result the weight of the error signal as a supervision signal should decrease over time during training. This avoids the final reconstruction result being limited by the denoising network. In other words, during early stages of training, the constraint provided by the denoising network, due to its being tailored to the kinds of man-made objects expected to be present in the scene being modelled, accelerates training, but as training progresses this constraint would serve as a limiting factor on how close the implicit neural representation is able to get to a close 3D representation of the actual scene represented by the input images. By de-emphasising and eventually discontinuing the contribution of the denoising network, this limiting factor can be reduced and removed.

The terminating of this process can be triggered either based on a hyper-parameter of the trainer, or via a heuristic algorithm, for example. In some implementations the weight of the error signal decays over time.

The Laplacian image can be considered as an image that carries only the information about surface structures, including edges, flat surfaces, curved surface (of a sphere or cylinder for example) etc. In contrast, a depth image and (camera space) normal image carries information about the camera pose (position and orientation with respect to the scene), while a world-space normal image carries only point-based information about the surface. This means that a pixel on the normal image is only the normal vector given a point on the surface, whereas the Laplacian image carries the information of a local-patch (area) given the point on the surface around which the patch is located.

### Considering the benefits of Laplacian images comparing to other types of image in 3D reconstruction:

With a depth image: when the camera is present inside the scene, the relative depth of the same point in the scene changes, such that the depth image couples the information with camera-pose.

With a camera-space normal image: this can be directly derived from a depth image as described above, but also couples with camera pose information.

With both a depth image or a surface normal image, it is possible to eliminate the camera pose information by multiplying a reversed pose matrix (for example into world-space normal image), but this is implicitly introducing a "world-space coordinate" that the dataset should align to.

In contrast, the Laplacians around the surface are invariant to the coordinate system used to generate the viewpoint. Also, for both depth image and surface normal images, a pixel on the image represents the corresponding point on the surface, but the a pixel on the Laplacian image represent the curvature of the patch around the surface. A CNN may learn to convert a normal image to a Laplacian image during learning over 3D-related tasks, but it may be preferable to directly define this filter such that an extra CNN is not required to potentially achieve the same thing. Concluding, the Laplacian image carries patch-wise (instead of point-wise) information along the surface and is invariant the chosen coordinate system.

While the present technique as described compares a denoised and noisy Laplacian image, in an alternative implementation the 2D spatial image (a depth image or normal image) may be directly passed into the denoising network (to be denoised), if the denoising network has been trained using the 2D spatial images rather than the Laplacian images (or similar). However, this would require the denoising network to effectively learn a representation that is similar to the Laplacian Image, which would take extra time to learn to decouple the camera pose and to aggregate patch-wise curvatures. This is a choice of balance between learnt feature filters and hand-crafted filters. In the present case it is believed that a dedicated filter will achieve a better, and faster, result.

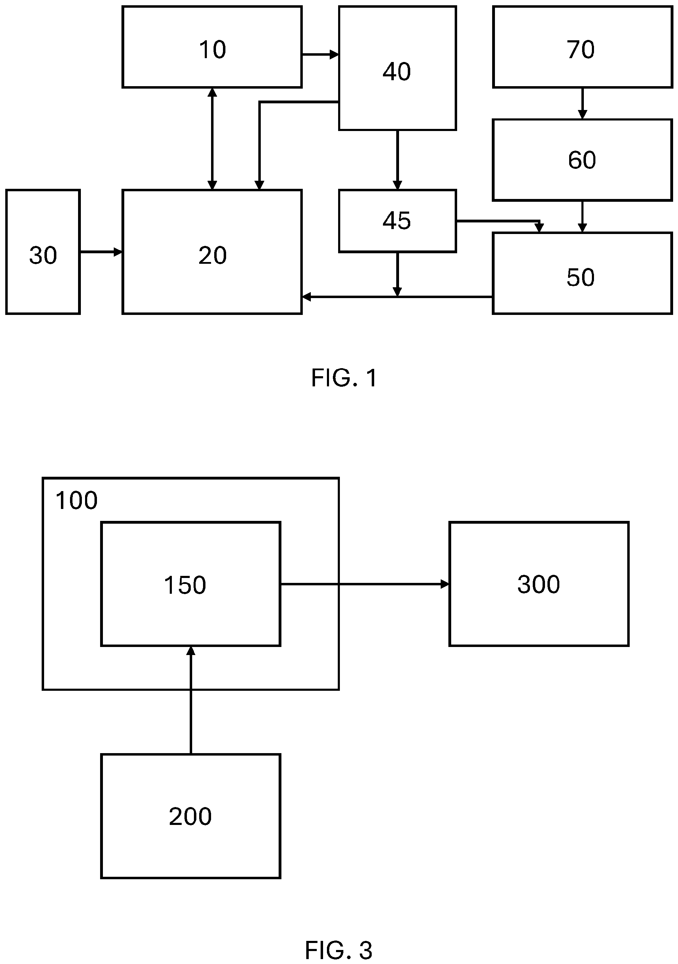

Referring to Figure 3, a system for rendering the final 3D model is shown. The system comprises a data processing apparatus 100 (which may be a general-purpose computer) having a user interface device 200 (which may for example be a keyboard and / or a mouse), and a display 300. The data processing apparatus has stored thereon the trained implicit neural representation model 150. The data processing apparatus 100 is responsive to a control signal received from a user via the user interface 200 to select a viewing position and field of view to be rendered, and to render a 2D image from the 3D model 150. The rendered image is provided to the display 300 to be displayed. It will be appreciated that, in some cases the instructions to the 3D model 150 may be automated or generated by another computer program, rather than being explicitly selected by the user.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer implemented method, comprising:
acquiring a plurality of images of a first scene captured from different viewing positions;
training a 3D implicit neural representation model for the scene using the acquired images; wherein
the training comprises rendering an image from the 3D model of the scene, the image being rendered as if captured from a first viewing position, comparing the rendered image with one of the acquired images taken from the first viewing position, and adjusting one or more parameters of the model in dependence on a result of the comparison; and
the training further comprises rendering a 2D spatial image bearing 3D information, the 2D spatial image being rendered as if captured from a second viewing position, and adjusting one or more parameters of the model in dependence on the 2D spatial image.

2. The method according to claim 1, wherein the 2D spatial image is one of a surface normal image or a depth image.

3. The method according to claim 1 or claim 2, comprising denoising the 2D spatial image, or a filtered version of the 2D spatial image to form a denoised image, comparing the 2D spatial image or the filtered version of the 2D spatial image with the denoised image, and adjusting the one or more parameters of the model in dependence on the comparison.

4. The method according to any preceding claim, comprising applying a surface shape filter to the 2D spatial image.

5. The method according to claim 4, wherein the surface shape filter is a Laplacian filter.

6. The method according to claim 3, wherein the filtered image is denoised using a denoising network, wherein the denoising network has been trained using synthetic 3D objects.

7. The method according to claim 6, comprising synthesising a second scene containing one or more synthetic 3D objects, rendering a 2D spatial image bearing 3D information of the second scene as if captured from a third viewing position, applying noise to the rendered 2D spatial image to generate a noisy image, and training the denoising network based on the noisy image and the original 2D spatial image.

8. The method according to claim 7, comprising applying a surface shape filter to the noisy 2D spatial image and the original 2D spatial image, and training the denoising network based on the filtered versions of the images.

9. The method according to claim 7 or claim 8, wherein the applied noise is an approximation of an expected type of noise to be generated when rendering a 2D image of a partially trained implicit neural representation.

10. The method according to any of claims 3 or 6 to 9, comprising generating a first error signal in dependence on the differences between the noisy image and the denoised image, wherein the first error signal is used to define a supervisory signal for adjusting the parameters of the implicit neural representation model.

11. The method according to claim 10, wherein the first error signal is combined with a second error signal generated from comparing the rendered images with the acquired images to form the supervisory signal.

12. The method according to claim 11, wherein the first and second error signals are weighted, and wherein a weighting of the first error signal reduces compared with the second error signal as training of the neural radiance field model progresses.

13. The method according to any preceding claim, comprising rendering and displaying a 2D image from the 3D model.

14. An apparatus comprising:
a memory storing a plurality of images of a first scene captured from different viewing positions, and storing an implicit neural representation model for the scene; and
a processor for training the implicit neural representation model using the acquired images; wherein
the training comprises rendering an image from the model of the scene, the image being rendered as if captured from a first viewing position, comparing the rendered image with one of the acquired plurality of images taken from the first viewing position, and adjusting one or more parameters of the model in dependence on a result of the comparison; and
the training further comprises rendering a 2D spatial image bearing 3D information, the 2D spatial image being rendered as if captured from a second viewing position, and adjusting one or more parameters of the model in dependence on the 2D spatial image.

15. A computer program, which when executed on a data processing apparatus causes the data processing apparatus to carry out a method according to any one of claims 1 to 13.
